**Europäisches Patentamt**

(19) **European Patent Office**

**Office européen des brevets**

(11) Publication number : **0 482 091 B1**

(12) # EUROPEAN PATENT SPECIFICATION

(45) Date of publication of patent specification :
14.06.95 Bulletin 95/24

(51) Int. Cl.$^6$ : **G21B 1/00**

(21) Application number : **90911744.2**

(22) Date of filing : **06.07.90**

(86) International application number :
**PCT/EP90/01137**

(87) International publication number :
**WO 91/01036 24.01.91 Gazette 91/03**

(54) **ENERGY SOURCE SYSTEM.**

(30) Priority : **11.07.89 FR 8909310**
**01.12.89 FR 8915897**

(43) Date of publication of application :
**29.04.92 Bulletin 92/18**

(45) Publication of the grant of the patent :
**14.06.95 Bulletin 95/24**

(84) Designated Contracting States :
**AT BE CH DE DK ES FR GB IT LI LU NL SE**

(56) References cited :
**Fusion Technology, volume 16, no. 2, September 1989, (La Grange Park, IL, US), Y. OKA et al.: "D2O-fueled fusion power reactor using electrochemically induced D-Dn, D-Dp, and deuterium-tritium reactions-preliminary design of a reactor system"**
**Technical Bulletin, Engelhard Industries, volume 7, nos. 1-2, 1966, Baker Platinum Division, (Sutton, Surrey, GB), H. Brodowsky et al.: "Solubility and Diffusion of hydrogen and deuterium in palladium and palladium alloys"**
**Fusion Technology, volume 16, no. 2, September 1989, (La Grange Park, IL, US), D. RUZIC et al.: "A novel apparatus to investigate the possibility of plasma-assisted cold fusion"**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **DUFOUR, Jacques, Julien, Jean**
**Centre de Recherche**
**Route de Caen**
**F-76530 Grand-Couronne (FR)**

## Description

This invention is related to an energy source system and to a method for producing energy.

In particular the present invention provides a method for recovering energy from metal hydride type lattice systems. The strange behaviour of hydrogen in metals, in particular in palladium has been studied for well over 100 years. Also the presence and properties of deuterium in palladium have been investigated. It is known that a large amount of hydrogen and/or deuterium, being in the ion-form, can be incorporated in metals such as palladium, thus forming a metal hydride type lattice system.

Although such systems are very interesting from a scientific point of view they have not attracted practical interest since the systems seem to absorb rather than to release energy. It would be very interesting to design and operate a system based on hydrogen isotopes and metals which would be capable of delivering energy.

It is therefore an object of this invention to provide an energy delivery process driven by a system filled with particles of at least one hydrogen isotope.

It is another object of this invention to provide an energy delivery system equipped with controllable starting means, shut down means, and restarting means.

It is yet another object of the present invention to provide an operable energy source system having operating conditions which can be modified easily.

It is a further object to provide an energy source system which is suitably coupled to a working system.

Furthermore it is an object of the present invention to design and develop an energy source system which can be integrated in existing power cycles.

The invention therefore provides a method for producing energy, comprising,

- filling a body with at least one hydrogen isotope, at least a part of the body comprising at least one metal capable of forming a metal hydride type lattice system,
- arranging the body filled as at least a part of the one conductor element of a capacitor means within an electrical circuit, the other conductor element of said capacitor means being connected with an externally controllable voltage supply means,
- operating said voltage supply means, and
- recovering energy produced within said body by operating said voltage supply means.

In an advantageous embodiment of the invention filling the body is carried out by arranging the body as an electrode means in an operating electrical circuit and exposing the body to said isotopes.

In another advantageous embodiment of the present invention filling the body is carried out by arranging the body in a pressure vessel containing under pressure a gas comprising at least one kind of hydrogen isotopes and exposing the body to said gas.

In a further embodiment in accordance with the present invention filling the body is carried out by arranging the body as an electrode means in an electrochemical system and exposing the body to ions from said electrochemical system.

In accordance with the method of the present invention said body is advantageously exposed to a flow of said isotopes being generated by an electrical discharge, and the energy produced is recovered from a heat exchange means.

Furthermore the invention provides an energy source system, comprising:

- a body, at least a part of the body comprising at least one metal capable of forming a metal hydride type lattice system and being at least a part of one conductor element of a capacitor means of which the other conductor element is connected to an externally controllable voltage supply means, said capacitor means and said voltage supply means forming an electrical circuit,
- a supply means for supplying at least one hydrogen isotope to be introduced into said body, and
- a recovering means for recovering energy produced within said body.

Advantageously said system enables a reliable and controllable coupling to a working machine allowing complete integration with a power cycle.

In an advantageous embodiment of the system in accordance with the present invention the body is an electrode means in an electrical discharge circuit, the circuit further comprising said supply means wherein the electrode means is the one conductor element of a capacitor means. Furthermore said system comprises a shielding means to be interposed between said body and said supply means capable of regulating the entering of isotopes into said body.

In another advantageous embodiment of the system of the present invention the body is arranged in a pressure vessel, the supply means comprising a pressurizing device for pressurizing a gas comprising said isotopes.

In yet another embodiment of the system in accordance with the present invention the body is an electrode means arranged in an electrochemical system acting as the supply means for supplying ions of said isotopes.

Further details of the invention will be described now by way of example with reference to the accompanying drawings.

Fig. 1A and Fig. 1B are drawings demonstrating schematically the principles underlying the present invention.

Fig. 2 shows an advantageous embodiment of the energy source system in accordance with the present invention.

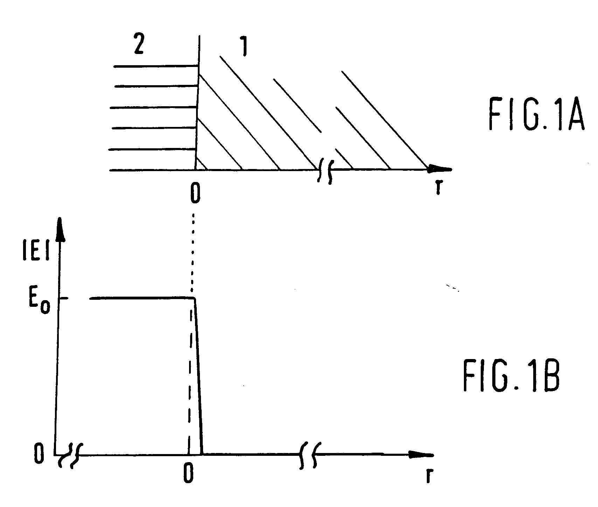

Before disclosing specific features and further details of the present invention a short outline of some electrostatical principles is given, thereby referring to figs. 1A and 1B.

In fig. 1A a metal/dielectric interface, for example in a capacitor means, is shown schematically. The graph as shown can be considered as a cross section. On the horizontal axis a distance parameter r is used with r = 0 at said interface (the vertical line at r = 0 schematically representing the interface).

In fig. 1B the same interface is indicated in a graph showing schematically the distance r on the horizontal axis as specified above and the electrical field strength E on the vertical axis.

In detail in fig. 1A the hatched part of the graph to the right of r = 0, referenced by 1, represents the metal functioning as a conductor element in a capacitor means, whereas to the left of r = 0, referenced by 2, the dielectric is shown.

In fig. 1B the E vs. r diagram represents the situation of an electrically charged capacitor. As known from basic physics the electrical field within a metal is zero and has a constant value in a dielectric, for example in a plate capacitor. In order to normalize voltage references like earthening references and charge differences the electrical field values E are presented as modular values $|E|$. The constant electrical field value referred to hereinabove is indicated as $E_o$.

As set forth above the body can be filled in an electrical way, in a mechanical way, or in an electrochemical way.

Respectively, in the electrical way of filling said body plasma-like conditions are created around the body, for example by arc, spark, or corona discharging of a gas containing at least one kind of hydrogen isotopes, and thus molecules, radicals and/or ions resulting from said conditions being allowed to enter into the body. It is also possible to create an electrical field in such a way that said body is exposed to a beam of ions of said isotopes.

When being filled in the mechanical way the body is arranged within a pressure vessel, comprising a gas of said isotopes, the gas being pressurized at a suitable temperature and thus isotopes being introduced into said body.

In the electrochemical way the body is an electrode means arranged in an electrolyte, the body being filled directly with ions of said isotopes originating from an electrolytic process.

Of great importance for the principle underlying the present invention is the occurrence of an electrical surface charge within the metal at the metal/dielectric interface. For example in a capacitor-type set up such a surface charge will result in an effective charge separation in accordance with the so-called phenomenon of electrical influence (or electrostatic induction). Consequently it is possible to charge positively or negatively a conductor element being influenced in the above way. Furthermore, electrically influencing of an already charged body allows repositioning of charges introduced before.

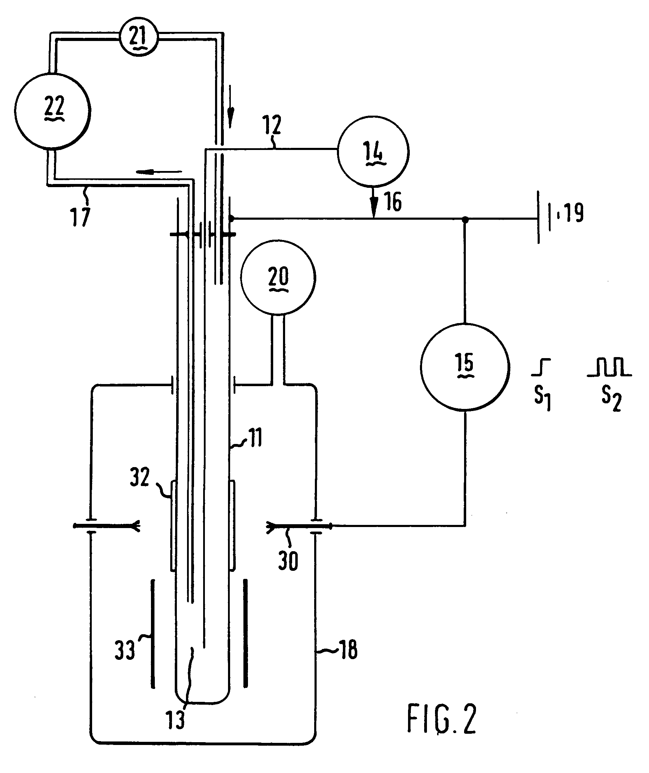

Now referring to fig. 2, an advantageous embodiment of the energy source system in accordance with the present invention is shown wherein the body is advantageously filled with at least one kind of hydrogen isotopes in the above-mentioned electrical way. The above-mentioned method for producing energy and the related energy source system will be disclosed in more detail.

In fig. 2 the system as disclosed comprises an electrical circuit wherein a body 11 is arranged as an electrode means. In said circuit a supply means 15, being a high voltage supply means, is connected, at one side with both earth 19 and said body 11, and at the other side with an electrical discharge device 30.

In a further embodiment of the present invention said electrode means is the one conductor element of a capacitor means, the other conductor element 12 being juxtaposed, with a dielectric element 13 therebetween.

Said other conductor element 12 can be comprised also in the above electrical circuit or can be implemented in a separate circuit.

In fig. 2 a controllable voltage supply 14 coupled to the other conductor element 12 is shown, either to be operated separately from the circuit 11, 15, 30, or to be connected therewith by means of a connector 16. Further detailed embodiments of the circuitry will be discussed below.

In the process according to present invention the body 11 has to be filled with molecules, radicals and/or ions of said hydrogen isotopes. Therefore the above high voltage supply means 15 is connected with the abovementioned electrical discharge device 30 for supplying said isotopes which is arranged in a chamber 18. Said chamber including said body 11 forms the heart of the energy source system, as such to be considered a reactor.

Said chamber 18 is connected with a gas supply device 20 for supplying a gas of at least one hydrogen isotope. For example deuterium as well as mixtures of hydrogen ($H_2$) and deuterium ($D_2$) can be supplied. Furthermore said gas supply device comprises a pressure control means in order to create suitable pressure conditions within said chamber. When supplied a number of molecules will be excited energetically to their radical- or ion-form by means of the discharge device 30. As will be clear to those skilled in the art, different types of electrical discharge devices like an arc, spark or corona discharge device could be employed. So the body 11 is exposed to said isotopes.

A further important feature is the way of operating the high voltage supply means 15 which controls the electrical discharge device 30. Generally the high voltage supply means is giving a DC-voltage having a continuous or pulsed form as shown in fig. 2 by the signal forms $s_1$ and $s_2$ respectively.

Furthermore, electrically influencing body 11 is achieved in the capacitor arrangement by controlling the voltage supply 14. As can be seen in fig. 2 said voltage supply 14 is connectable with the circuit 11, 15, 30 by means of the connector 16, i.e. at any position within the circuit.

From the foregoing it will be clear to those skilled in the art that driving said capacitor can be realised in any suitable way.

For example, the combination of voltage supply 14 and connector 16 can be employed as a neutralization means for neutralizing the electrical charges entered into and consequently having positions in the lattice system of said body 11.

Next, entering of the charges will be slowed down after a certain amount of ions, however, because of increasing electrical repulsive forces from charges already present within said conductor. Furthermore a dielectric breakdown in the dielectric 13 has to be avoided because of possible overcharging said conductor elements. Therefore said ions are to be neutralized repetitively by means of the above said neutralization means 14, 16.

In another embodiment of the circuit a voltage can be applied to the other conductor element 12, thereby externally affecting the electrical charge distribution present within the body 11. In particular this will be advantageous when the controllable voltage supply 14 is operated pulsewise and intermittently with respect to the pulses of the high voltage supply means 15; the amount of energy produced will increase significantly.

Furthermore in an advantageous embodiment the voltage supply 14 and connector 16 can be combined and can merely be operated in the form of a switch connected between the other conductor 12 and earth 19 thus functioning as a charge supply device, the switch being also capable to be operated pulsewise; for example when the switch operates as a spark supply means, the supply means 15 can be disconnected from the body 11 (for reason of clarity not shown in fig. 2).

In the above-mentioned embodiments the body 11 is filled with hydrogen isotopes, in particular D, in the electrical way. However, in the event that said body is filled in the electrochemical or mechanical way only the electrical circuit made up by the body 11 (being operated as a capacitor means) and the electrical circuit means 12,14 and 16 have to be considered.

For those skilled in the art it will be clear that in such event the controllable voltage supply 14 is implemented advantageously in such a way that electrically influencing of the filled body is applied optimally in order to affect the position of the hydrogen isotopes entered, thereby recovering energy efficiently.

For example the controllable voltage supply 14 comprises an ignition device tuned to the capacitor means 11, 12 having a well determined capacitance. In particular said ignition device generates high voltage pulses over the conductor elements causing transient electromagnetic fields in the conductor elements of said capacitor.

As stated above, recovering of energy from at least one electrode means filled with said isotopes is aimed at. Therefore at least a part of said body 11 has to be a metal or alloy forming a hydride type lattice system; said metal or metals having vacancies in their d and/or higher atomic energy levels and said isotopes being in the ion-form after having been introduced into the lattice system. In particular palladium (Pd), titanium (Ti), nickel (Ni) and lanthanum (La) are appropriate elements for forming such a lattice system. Suitably said part is a layer 32 of at least one such element arranged upon the body 11. For example the layer is soldered upon said body. Alternatively said layer is deposited upon said body, for instance by using the technique of chemical vapour deposition (CVD).

The energy produced within said body, emanates from physical and/or chemical processes. Recent physical explanation converges on nuclear fusion, also referred to as cold nuclear fusion or even piezonuclear fusion.

As dielectric element 13 a heat exchange means is chosen capable for recovering energy produced within said body. Both a solid arranged as an energy transfer means and a fluidum or fluidum flow respectively as an energy transfer or an energy transport means can be used. Furthermore channels passing through said solid and conducting a fluidum or fluidum flow like above can be employed also.

Advantageously the dielectric element includes or is part of a power cycle means, reference number 17 representing a circuit means allowing energy recovery. As shown in fig. 2 by way of example said circuit means is a fluidum conduit means, the fluidum flow direction is indicated by arrows.

In a further embodiment of the above set-up the fluidum is pressurized in a pumping or pressurizing device 21 to enhance the efficiency of the energy recovery. Advantageously, pressures between 100 kPa and 10000 kPa will be used.

As a fluidum hydrocarbons and/or derivatives thereof, and also water, can be suitably applied. In particular hydrocarbons and/or derivatives thereof, advantageously having large dielectric constants and breakdown values are particularly preferred.

The energy recovery can be controllably achieved either continuously or batchwise. Moreover, the electrical set up allows energy recovery and filling the body which can be effected simultaneously or intermittently as set forth above. So it appears to be advantageous to arrange a shielding means 33 within chamber 18 which can be placed between the discharge device 30 and the body 11 provided with the layer 32. So filling said body with isotopes can be regulated.

As can be seen in the set-up of fig. 2 (assuming a cross-sectional view) a cylindrical body, being the electrode means 11, c.q. the one conductor element of the capacitor as explained above, surrounds the other electrode 12 arranged as an inner electrode within the cylindrical body.

The electrical discharge device 30 comprises at least one annulus means surrounding the body 11, provided with conductor brushes as electrical discharge means at its inner edge and connected with the high voltage supply means 15 at its outer edge capable of creating sparks or a continuous arc there between.

The above-mentioned shielding means 33 is suitably a cylinder which can be interposed between the annulus and the electrode means.

Furthermore, the body 11, and in particular the layer 32, as shown in fig. 2, faces conductor brushes of the electrical discharge device 30.

The above energy recovering means can be coupled to a working machine 22 resulting in an integrated power cycle. Thus, existing cycles can be implemented economically with the source system in accordance with the present invention.

Yet another aspect of the present invention will be elucidated hereafter. As stated above for the different filling options, i.e. the electrical, the mechanical and the electrochemical case, said electrode means is filled with at least one hydrogen isotope. In said options at least a part of the electrical charges of the conductor elements have to be neutralized in order to continue said entering and filling process in a reliable and controllable way. Said neutralizing can be effected by means of the neutralization means 14, 16 as explained above and shown in fig. 2. Generally said neutralization means comprises a pulsating charge supply device having a pulse operating range from 10 Hz to 1 MHz.

The combination of the controllable voltage supply 14 and the connector 16 can be operated simply in the form of a switch between the other conductor 12 and earth 19, thus functioning as a charge supply device having also a pulse operating range.

Additionally when applying the pulsemode, in particular when the ignition device is used as explained above, transient electric fields will be created within the conductor elements of the capacitor, especially within the layer 32. A suitable pulse of the electrical charges of the conductor form has to be chosen in order to maximize the transient field efficiency.

Furthermore the connection by means of the connector 16 between the controllable voltage supply 14 and said one conductor element, especially the layer 32, has to be effected in such a way that dependent on the form of the layer 32 the transient field propagation is as large as possible. This can be suitably achieved when connector 16 is a conductor wire wrapped around the body 11 having a cylinder form and provided with the layer 32.

Detailed experiments have been carried out to chart the conditions under which energy recovery is obtained.

In the examples hereafter experimental results obtained are discussed in detail. Said results are gathered in the table below.

EXAMPLE I

In the experiments pertaining to this example (set I and set II, see table below) a Pd-layer soldered upon an outer electrode of steel having a cylindrical form and open at the upper side was filled with deuterium to $PdD_x$ with x up to 0.10 (or a concentration of 10%) by means of a corona discharge device within chamber 18 as shown in fig. 2.

The discharge causes voltages of 10-12 kV at frequencies in the range from 100 to 3000 Hz. In set I only one annulus was used, whereas in set II three annuli were used which are separately connectable and enable a more precise control of the experiments.

In order to effect the capacitor set-up a metal tube was positioned within said cylinder to function both as the other conductor element 12 of said capacitor and as an energy transfer conduit means.

By way of arranging a shielding means 33 in the form of a metal cylinder between said electrode and said brushes blank experiments were carried out. Then, no energy could be recovered at all during discharging under otherwise identical conditions.

A further important feature lies in the dynamic character of the experiments: i.e. an energy-recovery agent is circulated within a power cycle by the pumping or pressurizing device 21 as shown schematically in fig. 2. Said agent is introduced into the reactor via the above said metal tube as energy transfer conduit means and is carried back between the outer wall of said tube and the inner wall of the outer electrode by the pumping device, all forming part of the power cycle for recovering energy. In the present experiments DIALA-F-oil (RTM) was used as energy-recovery agent. The oil flow rate in the reactor was measured.

By measuring temperatures at a number of points, both nearby the capacitor and along said cycle, during well-defined time intervals making up a total meaning time, power values P, calculated for said intervals and defined for these particular sets as peak power values, have been determined. Furthermore deviations $\Delta P$ for said P values are determined by taking in account temperature differences, mainly caused by temperature background fluctuations, in particular those differences which were measured nearby the capacitor. Temperatures between 20 and 40 °C were measured.

In the experiments reported as set I and II a DC voltage of 25-40 kV was coupled continuously between the two conductor elements of the capacitor means.

EXAMPLE II

In this example, covering experiments reported in set III and set IV as shown in the table, a second approach for operating the energy source system is followed.

Firstly a steel body having a Pd-layer soldered thereupon was filled outside the reactor with deuterium. Deuterium gas at a pressure of 25 bar and at a temperature of 225 °C was introduced into the palladium layer during a period of 48 hours. This leads to a recovery-starting concentration x within the $PdD_x$-system of 0.25.

Next the body filled was placed within the reactor and an ignition device 14 as explained above was connected thereto. High-voltage pulses having peak values of 2000 V and pulse frequencies in the range between 2000 and 3500 Hz were fired between the conductor elements of the capacitor means resulting in recovering of energy as shown in the table below.

Like for the sets I and II of Example I, for set III also the dynamic approach was applied. On the contrary the experiments reported in set IV have been carried out under static conditions, i.e. within a Joule meter containing a well known amount of oil and for which a heat capacity of 391 J/°C and a heat transfer coefficient of 79 J/h.°C had been determined prior to the start of the above experiments. As dielectric element and heat recovery medium again DIALA-F-oil was used. For the different set IV-experiments corresponding different oil contents were used.

Additionally to the above said peak power values also mean power values, being power values calculated for the total measuring time, have been determined.

Especially set III and IV demonstrate a reproducible energy output. For the sets III and IV temperatures between 20 and 40 °C were measured.

As can be seen from the Table the mean P-values for set IV has appeared to stabilize around a recovery power of 0.23 W.

Furthermore in most experiments of set III and set IV one side of the ignition device had been connected advantageously around layer 32 on body 11 by means of a conductor wire which was wrapped around the cylinder as explained above. Only for the set IV experiment having a mean P-value of 0.180 W a pointwise connection of the conductor wire was used.

TABLE

| Set of experiments | way of filling electr. | way of filling mech. | isotope | peak P (W) | mean P (W) | ΔP (W) | $m_{Pd}$ (g) | $PdD_x$ x(%) | measuring time (h) | oil flow rate (cm³/min) | oil volume (l) |
|---|---|---|---|---|---|---|---|---|---|---|---|
| I | + | - | D | 6.84 | - | 1 | 12.7 | 10 | 24 | 193.5 | - |
| I | + | - | D | 2.11 | - | 1 | 12.7 | 10 | 24 | 193.5 | - |
| I | + | - | D | 4.75 | - | 1 | 12.7 | 10 | 24 | 193.5 | - |
| II | + | - | D | 1.73 | - | 0.2 | 5.9 | 5.0 | 24 | 193.5 | - |
| II | + | - | D | 1.80 | - | 0.2 | 5.9 | 7.9 | 24 | 193.5 | - |
| III | - | + | D | 0.58 | 0.14 | 0.2 | 5.9 | 25 | 12 | 193.2 | - |
| III | - | + | D | 0.77 | 0.41 | 0.2 | 5.9 | 25 | 12 | 193.2 | - |
| III | - | + | D | 0.82 | 0.31 | 0.2 | 5.9 | 25 | 12 | 193.2 | - |
| III | - | + | D | 0.68 | 0.44 | 0.2 | 5.9 | 25 | 12 | 193.2 | - |
| III | - | + | D | 0.82 | 0.48 | 0.2 | 5.9 | 25 | 12 | 193.2 | - |
| III | - | + | D | 0.60 | 0.21 | 0.2 | 5.9 | 25 | 12 | 193.2 | - |
| III | - | + | D | 0.69 | 0.19 | 0.2 | 5.9 | 25 | 12 | 193.2 | - |
| IV | - | + | D | - | 0.233 | 0.04 | 4.5 | 25 | 7.8 | - | 1.8 |
| IV | - | + | D | - | 0.180 | 0.04 | 4.5 | 25 | 8.6 | - | 1.8 |
| IV | - | + | D | - | 0.224 | 0.04 | 4.5 | 25 | 6.5 | - | 1.8 |
| IV | - | + | D | - | 0.199 | 0.04 | 4.5 | 25 | 8.5 | - | 1.8 |
| IV | - | + | D | - | 0.282 | 0.04 | 4.5 | 25 | 8.7 | - | 1.8 |
| IV | - | + | D | - | 0.284 | 0.04 | 4.5 | 25 | 6.0 | - | 1.8 |

With respect to the energy balance of the operating step of the method in accordance with the present invention, in particular related to the power values determined for set III and set IV, the following should be noted. For electrically influencing the metal hydride system (by operating the ignition device) an amount of input operating power of 0.050 W was needed. For the resulting total power release, an amount of 0.28 W was determined. Furthermore all kinds of possible losses feasible within said lattice system have been checked. Losses possibly caused by for example lattice deformation, dielectric loss, chemical reactions, and internal sparking have been taken in account. Weighing all these factors an amount not exceeding 0.050 W could be determined. Thus a recoverable power output of between four and five times the input operating power has been obtained.

In order to establish unambiguously the reproducibility and recovery of the system a number of blank experiments was carried out. Both measuring on the PdD-system without triggering, and next without inner tube, and triggering the body having an outer conductor element only consisting of steel, did not reveal any detectable energy recovery beyond the 0.050 W loss value discussed hereinabove.

It will be clear that an advanced control device controlling automatically the interacting activities of the above system elements, in particular with respect to their operating modes, can improve further the energy output and efficiency of the above method for producing energy from said energy source system.

Various modifications of the present invention will be apparent to those skilled in the art from the foregoing description and accompanying drawings. Such modifications are also within the scope of the present invention.

## Claims

1. A method for producing energy, comprising:
   - filling a body (11) with at least one hydrogen isotope, at least a part of the body comprising at least one metal (32) capable of forming a metal hydride type lattice system,
   - arranging the body (11) filled as at least a part of the one conductor element of a capacitor means (11, 12, 13) within an electrical circuit, the other conductor element of said capacitor means (11, 12, 13) being connected with an externally controllable voltage supply means (14),
   - operating said voltage supply means (14), and
   - recovering energy produced within said body by operating said voltage supply means.

2. The method as claimed in claim 1, wherein said body (11) being filled is arranged as an electrode means in an operating electrical discharge circuit (11, 15, 19, 30) and is exposed to said isotopes.

3. The method as claimed in claim 1, wherein said body (11) is filled, the body being arranged in a pressure vessel containing under pressure a gas comprising said isotopes and exposed to said gas.

4. The method as claimed in claim 1, wherein said body (11) is filled, the body being arranged as an electrode means in an electrochemical system and exposed to ions of said isotopes.

5. The method as claimed in anyone of the claims 1-4, wherein the body (11) is exposed to a flow of said isotopes.

6. The method as claimed in claim 1 and 2, wherein said voltage supply means (14) provides neutralizing at least a part of the electrical charges of the conductor elements (11, 12).

7. The method as claimed in claim 6, wherein the capacitor means (11, 12, 13) is only coupled to the voltage supply means (14).

8. The method as claimed in claim 7, wherein the voltage supply means (14) generates voltage pulses over the conductor elements (11, 12).

9. The method as claimed in claim 2, wherein during filling said isotopes are subjected to an electrical discharge (30).

10. The method as claimed in claim 9, wherein the electrical discharge (30) is effected pulsewise by operating in a pulsefrequency mode ranging from 10 Hz to 1 MHz.

11. The method as claimed in any one of the foregoing claims, wherein the energy produced is recovered from a heat exchange means.

12. The method as claimed in claim 11, wherein a dielectric element (13) of said capacitor means (11, 12, 13) is used as a heat exchange means.

13. The method as claimed in claim 11, wherein said heat exchange means is a fluidum flow arranged as an energy transfer means.

14. The method as claimed in claim 1, wherein recovering of energy is effected continuously.

15. The method as claimed in claim 1, wherein recovering of energy is effected batchwise.

16. The method as claimed in claim 2, wherein recovering of energy is controlled by interposing a shielding means (33) between the body (11) and the supply means (30).

17. The method as claimed in any one of the foregoing claims, wherein at least a part of said energy is produced by nuclear fusion within said body (11).

18. An energy source system, comprising:
    - a body (11), at least a part of the body comprising at least one metal (32) capable of forming a metal hydride type lattice system and being at least a part of one conductor element of a capacitor means (11, 12, 13), of which the other conductor element (12) is connected to a controllable voltage supply means (14), said capacitor means and said voltage supply means forming an electrical circuit,
    - a supply means for supplying at least one hydrogen isotope to be introduced into said body, and
    - a recovering means for recovering energy produced within said body.

19. The system as claimed in claim 18, wherein the body (11) is an electrode means in an electrical circuit, the circuit further comprising a high voltage supply means (15) as said supply means.

20. The system as claimed in claim 18, wherein the body is arranged in a pressure vessel, the supply means comprising a pressurizing device for pressurizing a gas comprising said isotopes.

21. The system as claimed in claim 18, wherein the body (11) is an electrode means arranged in an electrochemical system acting as the supply means for supplying ions of said isotopes.

22. The system as claimed in any one of the claims 18-21, wherein the supply means supplies a flow of isotopes.

23. The system as claimed in claim 19, wherein said high voltage supply means (15) comprises an electrical discharge device (30).

24. The system as claimed in claim 23, wherein said high voltage supply means (15) further comprises a pulse supply means.

25. The system as claimed in claim 19 wherein the electrode means is the one conductor element (11) of a capacitor means (11, 12, 13).

26. The system as claimed in claim 19 and 25, wherein the controllable voltage supply means (14) is a neutralization means for neutralizing at least a part of the electrical charges of the conductor elements (11, 12).

27. The system as claimed in claim 26, wherein said neutralization means (14) is a switch connected to the one conductor element (12).

28. The system as claimed in claims 24 and 26, wherein said neutralization means (14) is connected to said pulse supply means (15).

29. The system as claimed in claim 24, wherein said pulse supply means (15) has a frequency range operating range from 10 Hz to 1 MHz.

30. The system as claimed in claim 19 and 25, wherein the capacitor means (11, 12, 13) is only coupled to the controllable voltage supply means (14).

31. The system as claimed in claim 30, wherein the voltage supply means (14) is an ignition device supplying voltage pulses over said one conductor element (12).

**32.** The system as claimed in claim 31, wherein voltage pulses having peak values up to 3000 V are generated in the frequency range of between 100 Hz and 10 kHz.

**33.** The system as claimed in claim 18, wherein the recovering means comprises a heat exchange means.

**34.** The system as claimed in claim 25 and 33, wherein a dielectric element (13) of said capacitor (11, 12, 13) is said heat exchange means.

**35.** The system as claimed in claim 34, wherein said heat exchange means is a fluidum flow arranged as an energy transport means.

**36.** The system as claimed in claim 35, wherein the fluidum comprises hydrocarbons and/or derivatives thereof.

**37.** The system as claimed in any one of the foregoing claims, wherein the system is coupled to a working machine as a part of an integrated power cycle (17, 21, 22).


### Patentansprüche

**1.** Verfahren zur Erzeugung Energie, umfassend die folgenvonden Schritte:
- das Füllen eines Körpers (11) mit mindestens einem Wasserstoffisotop, wobei mindestens ein Teil des Körpers mindestens ein zur Bildung eines Gittersystems vom Metallhydridtyp fähiges Metall (32) enthält,
- das Anordnen des gefüllten Körpers (11) als wenigstens einen Teil des einen Leiterelements einer Kondensatoreinrichtung (11, 12, 13) innerhalb einer elektrischen Schaltung, wobei das andere Leiterelement der Kondensatoreinrichtung (11, 12, 13) mit einer extern steuerbaren Spannungsquelleneinrichtung (14) verbunden ist,
- das Betreiben der Spannungsquelleneinrichtung (14), und
- die Gewinnung von in dem Körper erzeugter Energie durch Betreiben der Spannungsquelleneinrichtung.

**2.** Verfahren nach Anspruch 1, wobei der zu füllende Körper (11) als Elektrodeneinrichtung in einer in Betrieb befindlichen elektrischen Entladungsschaltung (11, 15, 19, 30) angeordnet und mit den Isotopen beaufschlagt wird.

**3.** Verfahren nach Anspruch 1, wobei der Körper (11) gefüllt wird und dabei in einem Druckgefäß angeordnet ist, das unter Druck ein die Isotopen enthaltendes Gas enthält, und dem Gas ausgesetzt wird.

**4.** Verfahren nach Anspruch 1, wobei der Körper (11) gefüllt wird und dabei als eine Elektrodeneinrichtung in einem elektrochemischen System angeordnet ist und mit Ionen der Isotope beaufschlagt wird.

**5.** Verfahren nach einem der Ansprüche 1-4, wobei der Körper (11) mit einem Strom der Isotope beaufschlagt wird.

**6.** Verfahren nach Anspruch 1 und 2, wobei die Spannungsquelleneinrichtung (14) die Neutralisierung wenigstens eines Teils der elektrischen Ladungen der Leiterelemente (11, 12) vermittelt.

**7.** Verfahren nach Anspruch 6, wobei die Kondensatoreinrichtung (11, 12, 13) nur mit der Spannungsquelleneinrichtung (14) gekoppelt ist.

**8.** Verfahren nach Anspruch 7, wobei die Spannungsquelleneinrichtung (14) Spannungsimpulse über die Leiterelemente (11, 12) erzeugt.

**9.** Verfahren nach Anspruch 2, wobei die Isotope während der Füllung einer elektrischen Entladung (30) unterworfen werden.

**10.** Verfahren nach Anspruch 9, wobei die elektrische Entladung (30) impulsweise erfolgt, indem man in einer Impulsfrequenzfahrweise im Bereich von 10 Hz bis 1 MHz arbeitet.

11. Verfahren nach einem der vorhergehenden Ansprüche, wobei die erzeugte Energie aus einer Wärmeaustauschereinrichtung gewonnen wird.

12. Verfahren nach Anspruch 11, wobei ein dielektrisches Element (13) der Kondensatoreinrichtung (11, 12, 13) als Wärmeaustauschereinrichtung verwendet wird.

13. Verfahren nach Anspruch 11, wobei es sich bei der Wärmeaustauschereinrichtung um eine als Energieübertragungseinrichtung gestaltete Fluidströmung handelt.

14. Verfahren nach Anspruch 1, wobei die Energiegewinnung kontinuierlich erfolgt.

15. Verfahren nach Anspruch 1, wobei die Energiegewinnung diskontinuierlich erfolgt.

16. Verfahren nach Anspruch 2, wobei die Energiegewinnung durch Einschieben einer Abschirmeinrichtung (33) zwischen den Körper (11) und die Quelleneinrichtung (30) gesteuert wird.

17. Verfahren nach einem der vorhergehenden Ansprüche, wobei wenigstens ein Teil der Energie durch Kernfusion im Körper (11) erzeugt wird.

18. Energiequellensystem, umfassend:
   - einen Körper (11), wobei wenigstens ein Teil des Körpers mindestens ein zur Bildung eines Gittersystems vom Metallhydridtyp fähiges Metall (32) enthält und wenigstens einen Teil eines Leiterelements einer Kondensatoreinrichtung (11, 12, 13) ausmacht, deren anderes Leiterelement (12) mit einer steuerbaren Spannungsquelleneinrichtung (14) verbunden ist, wobei die Kondensatoreinrichtung und die Spannungsquelleneinrichtung eine elektrische Schaltung bilden,
   - eine Zufuhr- bzw. Quelleneinrichtung zum Zuführen bzw. Liefern wenigstens eines in den Körper einzubringenden Wasserstoffisotops, und
   - eine Gewinnungseinrichtung zur Gewinnung von in dem Körper erzeugter Energie.

19. Verfahren nach Anspruch 18, wobei der Körper (11) eine Elektrodeneinrichtung in einer elektrischen Schaltung darstellt und die Schaltung weiter als die Quelleneinrichtung eine Hochspannungsquelleneinrichtung (15) umfaßt.

20. System nach Anspruch 18, wobei der Körper in einem Druckgefäß angeordnet ist und die Zufuhreinrichtung eine Unterdrucksetzungsvorrichtung zur Unterdrucksetzung eines die Isotope enthaltenden Gases umfaßt.

21. System nach Anspruch 18, wobei der Körper (11) eine Elektrodeneinrichtung darstellt, die in einem elektrochemischen System angeordnet ist, welches als Quelleneinrichtung zum Liefern von Ionen der Isotope fungiert.

22. System nach einem der Ansprüche 18-21, wobei die Zufuhreinrichtung einen Strom von Isotopen zuführt.

23. System nach Anspruch 19, wobei die Hochspannungsquelleneinrichtung (15) eine elektrische Entladungsvorrichtung (30) umfaßt.

24. System nach Anspruch 23, wobei die Hochspannungsquelleneinrichtung (15) weiter eine Impulsquelleneinrichtung umfaßt.

25. System nach Anspruch 19, wobei es sich bei der Elektrodeneinrichtung um das eine Leiterelement (11) einer Kondensatoreinrichtung (11, 12, 13) handelt.

26. System nach den Ansprüchen 19 und 25, wobei die steuerbare Spannungsquelleneinrichtung (14) eine Neutralisierungseinrichtung zur Neutralisierung wenigstens eines Teils der elektrischen Ladungen der Leiterelemente (11, 12) darstellt.

27. System nach Anspruch 26, wobei es sich bei der Neutralisierungseinrichtung (14) um einen mit dem einen Leiterelement (12) verbundenen Schalter handelt.

28. System nach den Ansprüchen 24 und 26, wobei die Neutralisierungseinrichtung (14) mit der Impulsquelleneinrichtung (15) verbunden ist.

**29.** System nach Anspruch 24, wobei die Impulsquelleneinrichtung (15) einen Arbeitsbereich des Frequenzbereichs zwischen 10 Hz und 1 MHz aufweist.

**30.** Verfahren nach den Ansprüchen 19 und 25, wobei die Kondensatoreinrichtung (11, 12, 13) nur mit der steuerbaren Spannungsquelleneinrichtung (14) gekoppelt ist.

**31.** System nach Anspruch 30, wobei die Spannungsquelleneinrichtung (14) eine Zündvorrichtung ist, die Spannungsimpulse über das eine Leiterelement (12) liefert.

**32.** System nach Anspruch 31, wobei Spannungsimpulse mit Spitzenwerten bis 3000 V im Frequenzbereich zwischen 100 Hz und 10 kHz erzeugt werden.

**33.** System nach Anspruch 18, wobei die Gewinnungseinrichtung eine Wärmeaustauschereinrichtung umfaßt.

**34.** System nach den Ansprüchen 25 und 33, wobei es sich bei der Wärmeaustauschereinrichtung um ein dielektrisches Element (13) des Kondensators handelt.

**35.** System nach Anspruch 34, wobei es sich bei der Wärmeaustauschereinrichtung um eine als Energietransporteinrichtung gestaltete Fluidströmung handelt.

**36.** System nach Anspruch 35, wobei das Fluid Kohlenwasserstoffe und/oder deren Derivate umfaßt.

**37.** System nach einem der vorhergehenden Ansprüche, wobei das System mit einer Arbeitsmaschine als Teil eines integrierten Arbeitszyklus (17, 21, 22) gekoppelt ist.

## Revendications

**1.** Procédé de production d'énergie comprenant :

le remplissage d'un corps (11) avec au moins un isotope d'hydrogène, au moins une partie du corps comprenant au moins un métal (32) permettant de former un système de réseau cristallin du type hybride métal ;

l'agencement du corps (11) rempli en tant qu'au moins une partie d'un premier élément conducteur d'un moyen de capacité (11, 12, 13) dans un circuit électrique, l'autre élément conducteur dudit moyen de capacité (11, 12, 13) étant connecté à un moyen d'application de tension commandable de façon externe (14) ; et

l'activation dudit moyen d'application de tension (14) et la récupération de l'énergie produite dans ledit corps en activant ledit moyen d'application de tension.

**2.** Procédé selon la revendication 1, dans lequel ledit corps (11) qui est rempli est agencé en tant que moyen d'électrode dans un circuit de décharge électrique d'activation (11, 15, 19, 30) et est exposé auxdits isotopes.

**3.** Procédé selon la revendication 1, dans lequel ledit corps (11) est rempli, le corps étant agencé dans un récipient sous pression contenant un gaz sous pression comprenant lesdits isotopes et étant exposé audit gaz.

**4.** Procédé selon la revendication 1, dans lequel ledit corps (11) est rempli, le corps étant agencé en tant que moyen d'électrode dans un système électrochimique et étant exposé à des ions desdits isotopes.

**5.** Procédé selon l'une quelconque des revendications 1 à 4, dans lequel le corps (11) est exposé à un écoulement desdits isotopes.

**6.** Procédé selon les revendications 1 et 2, dans lequel ledit moyen d'application de tension (14) assure la neutralisation d'au moins une partie des charges électriques des éléments conducteurs (11, 12).

**7.** Procédé selon la revendication 6, dans lequel le moyen de capacité (11, 12, 13) est seulement couplé au moyen d'application de tension (14).

8. Procédé selon la revendication 7, dans lequel le moyen d'application de tension (14) génère des impulsions de tension sur les éléments conducteurs (11, 12).

9. Procédé selon la revendication 2, dans lequel, pendant le remplissage, lesdits isotopes sont soumis à une décharge électrique (30).

10. Procédé selon la revendication 9, dans lequel la décharge électrique est effectuée de façon impulsionnelle en réalisant une activation dans un mode fréquence impulsionnelle dans une plage de 10 Hz à 1 MHz.

11. Procédé selon l'une quelconque des revendications précédentes, dans lequel l'énergie produite est récupérée depuis un moyen d'échange thermique.

12. Procédé selon la revendication 11, dans lequel un élément diélectrique (13) dudit moyen de capacité (11, 12, 13) est utilisé en tant que moyen d'échange thermique.

13. Procédé selon la revendication 11, dans lequel ledit moyen d'échangeur thermique est un écoulement de fluide agencé en tant que moyen de transfert d'énergie.

14. Procédé selon la revendication 1, dans lequel la récupération de l'énergie est réalisée en continu.

15. Procédé selon la revendication 1, dans lequel la récupération de l'énergie est réalisée par lots.

16. Procédé selon la revendication 2, dans lequel la récupération de l'énergie est commandée en interposant un moyen de protection (33) entre le corps (11) et le moyen d'application (30).

17. Procédé selon l'une quelconque des revendications précédentes, dans lequel au moins une partie de ladite énergie est produite par fusion nucléaire à l'intérieur du corps (11).

18. Système de source d'énergie comprenant :
   un corps (11), au moins une partie du corps comprenant au moins un métal (32) permettant de former un système de réseau cristallin du type hybride métal et constituant au moins une partie d'un élément conducteur d'un moyen de capacité (11, 12, 13) dont l'autre élément conducteur (12) est connecté à un moyen d'application de tension commandable (14), ledit moyen de capacité et ledit moyen d'application de tension formant un circuit électrique ;
   un moyen d'alimentation pour appliquer au moins un isotope d'hydrogène destiné à être introduit dans ledit corps ; et
   un moyen de récupération pour récupérer l'énergie produite dans ledit corps.

19. Système selon la revendication 18, dans lequel le corps (11) est un moyen d'électrode dans un circuit électrique, le circuit comprenant en outre un moyen d'application de haute tension (15) en tant que dit moyen d'alimentation.

20. Système selon la revendication 18, dans lequel le corps est agencé dans un récipient sous pression, le moyen d'alimentation comprenant un dispositif de pressurisation permettant de pressuriser un gaz comprenant lesdits isotopes.

21. Système selon la revendication 18, dans lequel le corps (11) est un moyen d'électrode agencé dans un système électrochimique qui joue le rôle de moyen d'alimentation pour appliquer des ions desdits isotopes.

22. Système selon l'une quelconque des revendications 18 à 21, dans lequel un moyen d'alimentation applique une circulation d'isotopes.

23. Système selon la revendication 19, dans lequel ledit moyen d'application de haute tension (15) comprend un dispositif de décharge électrique (30).

24. Système selon la revendication 23, dans lequel ledit moyen d'application de haute tension (15) comprend en outre un moyen d'application d'impulsions.

25. Système selon la revendication 19, dans lequel le moyen d'électrode est l'élément conducteur (11) d'un moyen de capacité (11, 12, 13).

26. Système selon les revendications 19 et 25, dans lequel le moyen d'application de tension commandable (14) est un moyen de neutralisation permettant de neutraliser au moins une partie des charges électriques des éléments conducteurs (11, 12).

27. Système selon la revendication 26, dans lequel ledit moyen de neutralisation (14) est un commutateur connecté à l'élément conducteur (12).

28. Système selon les revendications 24 et 26, dans lequel ledit moyen de neutralisation (14) est connecté audit moyen d'application d'impulsions (15).

29. Système selon la revendication 24, dans lequel ledit moyen d'application d'impulsions (15) présente une plage de fonctionnement en fréquence de 10 Hz à 1 MHz.

30. Système selon les revendications 19 et 25, dans lequel le moyen de capacité (11, 12, 13) est seulement couplé au moyen d'application de tension commandable (14).

31. Système selon la revendication 30, dans lequel le moyen d'application de tension (14) est un dispositif d'allumage qui applique des impulsions de tension sur ledit un élément conducteur (12).

32. Système selon la revendication 31, dans lequel des impulsions de tension présentant des valeurs de pic allant jusqu'à 3000 V sont générées dans la plage de fréquences comprise entre 100 Hz et 10 kHz.

33. Système selon la revendication 18, dans lequel le moyen de récupération comprend un moyen d'échange thermique.

34. Système selon les revendications 25 et 33, dans lequel un élément diélectrique (13) de ladite capacité (11, 12, 13) est ledit moyen d'échange thermique.

35. Système selon la revendication 34, dans lequel ledit moyen d'échange thermique est un écoulement de fluide agencé en tant que moyen de transport d'énergie.

36. Système selon la revendication 35, dans lequel le fluide comprend des hydrocarbones et/ou des dérivés de ceux-ci.

37. Système selon l'une quelconque des revendications précédentes, dans lequel le système est couplé à une machine de traitement en tant que partie d'un cycle de puissance intégré (17, 21, 22).

FIG.1A

FIG.1B

FIG.2